# EUROPEAN PATENT APPLICATION

(11) **EP 3 305 097 A1**
(43) Date of publication of application: **11.04.2018**
(21) Application number: 17382656.1
(22) Date of filing: 03.10.2017
(51) Int. Cl.: A23L 3/015, A23L 3/10, A23L 3/16

(54) **A PROCESS FOR FOOD PASTEURIZATION AND/OR STERILIZATION AND INSTALLATION FOR ITS OPERATION**

(30) Priority: 06.10.2016 ES 201630939
(71) Applicant: Energesa SL, 26500 Calahorra (ES)
(72) Inventor: LORENTE GARCÍA, FELIX ANGEL, 26500 CALAHORRA (ES)
(74) Representative: Aguilar Catalán, Blanca

(57) **Abstract**

The process consists in carrying the cooking and pasteurization processes out in a single operation. Vacuum-packed foodstuffs are subjected alternately to vapour pressures up to 5 bars and vacuum pressures up to 1 bar with treatment periods from 30 minutes to 180 minutes. This advanced design takes advantage of the vacuum packaging of the food so that the food is cooked in its own juice, avoiding moisture or starches losses during its cooking, preserving the organoleptic properties and achieving lower temperatures compared to traditional cooking and pasteurization processes.

## Description

### TECHNOLOGY DOMAINS

The invention presented in this document is related to a food pasteurization process, specifically to join both cooking and pasteurization processes in vacuum packet foods under varying pressures in just one process.

The objective of this invention is to provide a pasteurization process in which food does not suffer any physical/chemical alteration changing its sensory properties, colour, smell, aromas and taste, and its nutrients as well.

The invention is also related with the installation to operate the process in a single food treatment chamber. It is possible to take advantage of the installation not only in pasteurization, but also in food sterilization processes.

### BACKGROUND

In the agro-food industry field, a sector in Spain with wide offer of both products (canned, fresh, ready to eat foods and so on) and companies that produce and market this type of products, competitiveness is very high, so it is essential to shine in this sector the identification of the most strategic points of consumption and to catch modern trends to be able to define present-day policies to be different from competitors.

Nowadays a clear demand of ready to eat food is detected in two ways (which can be complementary):
Development of advanced products: wider variety, up to the minute and quality and organoleptic characteristics improvement; formats and packaging that simplify storage and use in the kitchen; less food reduction; conservation and preparation techniques that will help to reduce energy costs, space and working time; healthier products and with greater sanitary guarantees.

Development of advanced technologies for food preservation: all these techniques focuses on a reduction of storage, transport, preparation costs; easier store, and a longer product lifetime.

For that reason, the efforts of the sector respond to such pre-cooked products demand that minimize as far as possible the thermal process applied to their cooking and preservation, without effects in the organoleptic quality of the product.

To this end, there are two independent and usual processes in this area, which are vacuum cooking and pasteurization.

Regarding vacuum cooking, the process consists of baking the food (vacuum packed in bags) in a water bath, at temperatures never exceeding 100 ° C and for relatively long periods (hours or tens hours multiples), making the food to preserve much more its flavours and juices that would degrade or evaporate with higher temperatures. In return, it is necessary to pack the food in an airtight plastic bag, ensuring that no water or liquid enters the package. Pressure will make possible to cook the food much faster, without spoiling the flavour of food pieces. An advantage is that the resulting food is much more aromatic and juicy because aromas and juices do not evaporate. Due to the vacuum process, the boiling point of the water to drops considerably (around 60°C) reducing loss of juices, increasing tenderness in food (especially meat and fish), and making energy cost modest (the electricity needed to maintain the steady state temperature of a well-insulated water bath is minimum). In addition, the storage periods of the final product in refrigeration line is 6-21 days, depending on the type of product and the food preparation conditions.

Pasteurization process consists of a thermal process normally carried out on foods (almost always liquid) in order to reduce pathogens that may be contained in the food. Temperature in pasteurization is usually lower than 100 ° C for 20 seconds and the packaged food between 62 ° C and 68 ° C for longer periods of time, about 30 minutes. With the application of this technique lifetime of foods can be increased for several days. The intensity at which pasteurization treatment is developed depends on the resistance to significantly eradicate the population of microorganisms in the food to make it safe and innocuous.

Currently, two types of pasteurization processes are used in the food sector:
- HTST (High Temperature/Short Time) also named "flash pasteurization", a process in which the product is subjected to high temperatures (135°C) in micro seconds in several pulses and it is usually used for low density liquids in bulk such as milk, fruit juices or beer. The advantage of this type of process is that it does not change "too much" the food processing chain, and it is ideal for continuous processes.
- UHT (Ultra High Temperature), is a continuous process as well and the working temperature is higher than in HTST, it could be around 138-150°C for two seconds. It is ideal for liquid foods processing, with low density a slightly thick and a little sour, such as fruit juices and vegetable juices.

As expected, not all foods present the same response to treatment. Some factors can affect the effectiveness of the process. The most representative is the acidity of the product, which regulates the survival of pathogens. In pasteurization it is recommended to work with low pH. Bacteria cannot grow at pH below 4.5 then treatment may be less harsher and the organoleptic characteristics are not so affected. However, in foods with a higher pH such as milk, vegetables, meat orfish, higher process temperatures are necessary. It is noticed that process performance can be affected by heat capacity and heat penetration, so those foods that need more energy to increase their temperature (such as vegetables, meats or fish) need a more severe process than those which increase quickly their temperatures. Finally, it is also important to note that the physical form and the surface of the food also influence the success of the treatment. In particular, it can be observed that spherical or irregularly shaped foods (pieces of fruit, meat, etc.) entail more difficulties to pasteurize them correctly, due to the time necessary for heat penetration in them, variable and irregular. Therefore, it is necessary to increase the heating treatment period to ensure the microbiological stability of the food.

Such processes, until now, are carried out at constant pressure.

In both processes, (vacuum cooking/pasteurization at constant pressure), foods suffer physical and chemical changes.

Main changes in a fresh after thermal processing can be enumerated and classified as follows:
Physical changes. They modify the sensory properties of food.
   - Colour: it changes depending on the type of food and the culinary process to which it has been subjected.
   - Odour, aromas and flavour: the evolution of the taste depends on a combination of products, and sugars and proteins degradation. Cooking liberate certain volatile substances as well, mainly related to the taste, of both the food and the medium cooking medium.
   - Flavour: it reinforces the taste of food and the taste of substances that have been used in the cooking broth. A special contribution in the taste is given by the fat used for cooking
   - Volume and weight: loss of volume due to loss of water and / or fat
   - Consistency: heat changes the structure of proteins, vegetables and other foods; as a result, they will be more tender, juicy and more digestible
Chemical changes. They are those changes originated on nutrients
   - Fats: formation of by-products with an unpleasant effect on taste and odour. Changes in nutritional value due to fats increase with an increase in the energetic value
   - Minerals: usually stables against most culinary treatments as well, but it should be highlighted losses because of the water solubility
   - Vitamins: sensitive to thermal processes, and in general culinary processes produce losses of these nutrients. Water-soluble vitamins such as B and C can be lost during cooking, depending on the cooking method. Fat-soluble vitamins such as A, D, E and K also suffer losses due to heat and oxidation produced by air in contact with food.

Consequently, it is observed nowadays and industrial demand of advanced cooking and pasteurization methods avoiding any physical and chemical change in food. Additionally, the fact that cooking and a pasteurization are two independent and consecutive steps in current production processes causes the production chain to be longer and the final costs of product to be increased. A technical challenge stablished in the present patent consist of making possible to simplify the production process (cooking and pasteurization) in a single step in the production process, and, in addition, the foods that undergo this process maintain most of its organoleptic characteristics which are partially or totally. lost in traditional processes.

### SUMMARY OF THE INVENTION

The upheld process solves satisfactorily the problems considered above, in each and every one of its aspects already discussed.

For this purpose, the procedure is based on pasteurization with variable pressure.

With this advanced process pressure is added as a parameter, which will be variable during the cooking and sterilization processes, which influences noticeably the other cooking / sterilization parameters of the products, such as working temperature, working time, reducing them considerably, because these changes of pressure benefit several processes which will be described throughout the present specification.

More specifically, a chamber is the initial element making possible to introduce loads of bags of vacuum packaged foods in a portable system of trays. After loading, the camera will be sealed.

In such chamber, the product is subjected to a series of negative or positive pressure cycles, understood as positive pressure pasteurization processes at pressures between 1 and 5 bars with water or vapor pressure, and understood as negative pressure processes at total or partial vacuum (up to 1 bar vacuum). The number of processes, their combination and the estimated time for each of these processes between 5 and 90 minutes, depending on the formulation requirements. Therefore, it is possible to cook and pasteurize the food at the same in just one process, reaching temperatures from 50°C to 100°C, and an estimated process time between 30 minutes and 180 minutes. These pressure cycles will also take advantage of the vacuum packaging of the food so that it cooks in its own juice and does not lose moisture during its cooking.

To carry the cycles out the pressure of the chamber will be modified to reach the desired temperatures and pressures during the estimated period of time. Once the cooking/pasteurized cycles are finished, cooked and pasteurized foods will be taken from the chamber.

Thus, the installation intended for the implementation of the invention process consists of a single chamber for treatment of vacuum-packed foods. A circuit is defined for the application of vacuum into the chamber, through a condenser and a vacuum pump associated to it, a circuit to provide steam through the corresponding steam boiler, and a cooling water application circuit, where the temperature is controlled by a heat exchanger, including a cooling tower,

The chamber will have inside with a series of sprinklers and nozzles for application of steam, cooling water and vacuum, as well as with systems for draining the water that will condense or flow through it.

From this installation, and from the described process, some advantages are derived, among which the following are worthy of note:
- An increase in food porosity making easier their juices to enter and leaving them, favouring their cooking leading to more tasty products.
- Less heat applied to food: the heat supplied diffuses more efficiently in food and causes penetration curves to be much more effective than in traditional sterilization methods.
- Lower boiling temperatures that cause the water to evaporate at a much lower temperature, then less heat is applied to cook the product, and the water into product does not evaporate from the food because it is packaged under vacuum, then it spreads throughout the bag, so that the product has a homogeneous appearance, taste and colour.
- Optimization of the cooking process. Temperatures and periods of cooking/pasteurized operations can be further optimized to be clearly lower than the current ones, without thereby affecting Food Safety. Cooking and pasteurizing operations are integrated in a single process thus avoiding processes of re-contamination in subsequent packaging processes.
- Preservation of the nutritional value of food: since their cooking times and temperatures are lower, they will retain almost all their organoleptic qualities and all their nutrients, from fresh produce. Another factor to keep in mind and watch for, which is fundamental in food is to maintain the amount of starches in food during cooking because it is one of its most critical components when food is cooked. It is known that the starch in foods at atmospheric pressure begins to dissolve around 82-85 ° C, being that temperature or a lower temperature advisable to cook food. At higher temperatures, foods begin to lose exponentially the amount of starch, and secondary reactions of degradation of these starches occurs as they are expelled from the food. With the advanced method proposed in the invention the temperature of cooked and pasteurized foods will never be equal or higher than the temperature that produce significant loss of starches. Therefore, reactions of dissolved sugars degradation will be avoided obtaining a cooking and pasteurized of the food in a single process, without loss of starches, and avoiding reactions of degradation of the sugars. Thus, obtaining a product whose storage can be at both room or around 5°C temperatures.

### DESCRIPTION OF THE DRAWINGS

To complement the description below and in order to aid a better understanding of the invention features, according to a preferred example of its practical implementation, a set of plan diagrams, illustrative but not restrictive, is available as an integral part of such description, in which it is represented:
Figure 1.- It shows a schematic representation of an installation for the implementation of a food pasteurization process performed in accordance with the object of the present invention
Figure 2.- It shows, finally, a flow chart in schematic blocks of operational steps that define the process that concern us.

### DETAILED DESCRIPTION OF THE INVENTION

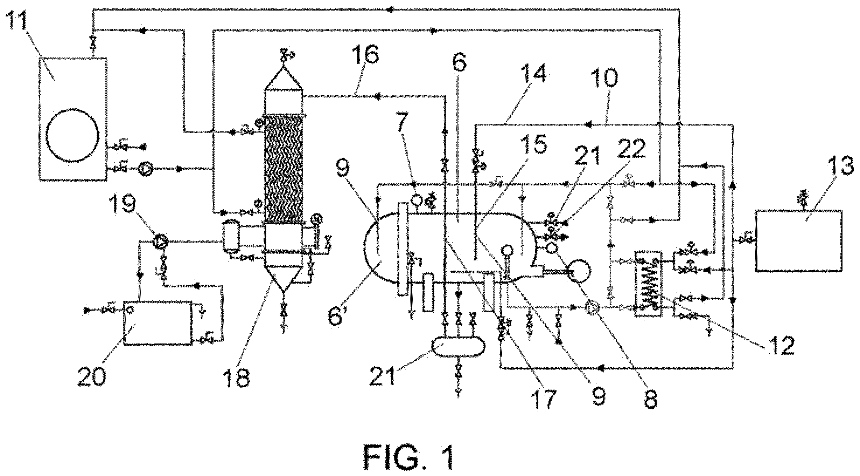

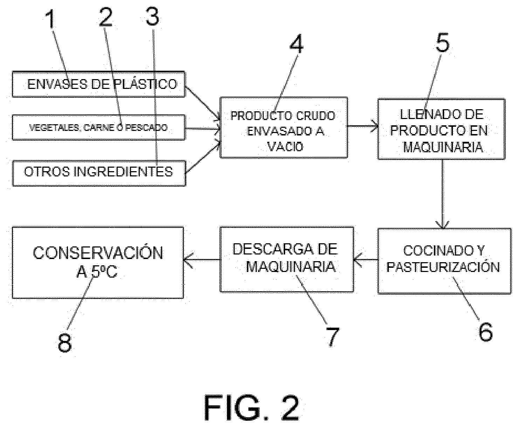

In view of the above-referenced figures, and in particular from Figure 2, it can be seen that the preferred procedure is applicable to several types of foods and formats, such as meat, fish or vegetables (2 in Figure 2), as well as other (3 in Figure 2) and a series of packages (1 in Figure 2), which may be made of plastic, glass or metal, into which they are placed. Such raw products are vacuum-packed (4 in Figure 2) to be inserted (5 in Figure 2) into the chamber (6 in Figure 1). The chamber is defined in the installation of the invention and it is showed in Figure 1.

As soon as the chamber (6 in Figure 1) is fed with vacuum-packed raw products, they are subjected to several cycles of the process at different pressures and temperatures, which may be both negative and positive, being treated by the application of vacuum, and / or water vapor or water. More specifically, in the process, between 1 cycle and 5 cycles of negative pressure (up to 1 bar vacuum) or positive (up to 5 bar pressure), with steam or water pressure, depending on cooking preferences for each food, to cook and pasteurize food at the same time, being able to reach temperatures between 50°C and 100°C, in time periods between 30 minutes and 180 minutes.

Likewise, the design of the facility is so versatile that it could be used for food pasteurization by traditional processes, reaching temperatures up to 130 ° C, at pressures within the chamber up to 5 bars, as well as pressures up to 1 bar vacuum. This design is so versatile that several processes of cooking / pasteurization, vacuum treatment, can be combined in a single operation either by "traditional" conditions or by a combination of them. The amount of heat applied to food may be optimized in order to avoid an excessive application of heat that causes degradation of their organoleptic qualities. This pressure cycle will take advantage of the vacuum packaging of the food so that it cooks in its own juice and does not lose moisture during its cooking. Once the process is finished, it is necessary to unload (7 in Figure 2) the treated product, and to keep (8 in Figure 2) this at room temperature or around 5°C.

As it can be seen in Figure 1, in order to carry this process out, it has an isolated chamber (6 in Figure 1) as previously mentioned, with its corresponding access door (6 'in Figure 1), with pressure sensors (7 in Figure 1) and temperature sensors (8 of Figure 1) to control all the time the work cycles into the chamber, a chamber (6 in Figure 1) in which a series of showers (9 in Figure 1) associated with a water circuit (10 Figure 1), connected to a cooling tower (11 to Figure 1). The cooling tower temperature is controlled by selectively moving water through a heat exchanger (12 in Figure 1), associated with a steam boiler (13 in Figure 1), in which a vapour circuit starts (14 in Figure 1). Vapour is introduced selectively into the chamber (6 in Figure 1) through the corresponding diffusers (15 in Figure 1),

Finally, the chamber is assisted by a third circuit, specifically a vacuum circuit (16 in Figure 1), by which negative pressures are applied to the chamber (6 in Figure 1) through some ports (17 in Figure 1), a vacuum circuit (16 in Figure 1) which is connected to a condenser (18 in Figure 1) and a vacuum pump (19 in Figure 1) associated with a water reservoir (20 in Figure 1). Condensed or irrigated water inside the chamber (6 in Figure 1) may be removed by the corresponding drainage lines (21 in Figure 1), being also stablished an inlet and outlet of compressed air (21-22 both in Figure 1).

## Claims

1. ^{a}.- A process for food pasteurization and/or sterilization **characterized in that** next operational steps are stablished in it:
• Raw food, whether meat, fish, vegetables or a mixture of then and / or other ingredients such as oils, sauces, and / or raw species are vacuum packed.
• A vacuum-packed product is subjected to a pasteurization process under varying pressure (positive pressures up to 5 bars and negative pressures up to 1 bar of vacuum) by defining several treatment cycles at different pressures and temperatures, reaching temperatures from 50 ° C to 100 ° C, at time intervals between 30 minutes and 180 minutes, with a higher or lower temperature being required depending on thermal diffusion coefficient and the shape of the food, among other variables.
• Preservation of treated products at both room temperature and refrigerated (5 ° C).

2. ^{a}.- An installation for food pasteurization and / or sterilization, **characterized in that** it is constituted by a sealed chamber (6 in Figure 1), with its own access door (6 ' in Figure 1), in which pressure sensors (7 in Figure 1) and temperature sensors (8 in Figure 1) are configurated to control all the time the work cycles within the chamber, a chamber (6 in Figure 1) including a series of showers (9 in Figure 1) associated with a water circuit (10 in Figure 1), connected to a cooling tower (11 of Figure 1). The cooling tower temperature is controlled by selectively moving water through a heat exchanger (12 in Figure 1), associated with a steam boiler (13 in Figure 1), in which a vapour circuit starts (14 in Figure 1). Vapour is introduced selectively into the chamber (6 in Figure 1) through the corresponding diffusers (15 in Figure 1), with the peculiarity that the chamber includes a vacuum circuit (16 in Figure 1), by which negative pressures are applied to the chamber (6 in Figure 1), associated with a vacuum pump (19 in Figure 1) and connected to a condenser (18 in Figure 1). The chamber (6 in Figure 1) has being further provided with drainage systems (21 in Figure 1), as well as with an inlet and an outlet of compressed air (21-22 both in Figure 1).
